# EUROPEAN PATENT APPLICATION

(11) **EP 4 398 621 A1**
(43) Date of publication of application: **10.07.2024**
(21) Application number: 22864005.8
(22) Date of filing: 20.06.2022
(51) Int. Cl.: H04W 16/28, H04W 16/26, H04W 72/04

(54) **BASE STATION DEVICE, REPEATER DEVICE, WIRELESS COMMUNICATION SYSTEM, METHOD FOR CONTROLLING SAME, AND PROGRAM**

(30) Priority: 02.09.2021 JP 2021143374
(71) Applicant: KDDI Research, Inc., Fujimino-shi, Saitama 356-8502 (JP)
(72) Inventor: WATANABE, Taishi, Fujimino-shi, Saitama 356-8502 (JP); OHSEKI, Takeo, Fujimino-shi, Saitama 356-8502 (JP); KATAOKA, Ryochi, Fujimino-shi, Saitama 356-8502 (JP)
(74) Representative: Pitchford, James Edward
(86) International application number: PCT/JP2022/024466
(87) International publication number: WO 2023/032417

(57) **Abstract**

A base station apparatus that communicates with a user apparatus by a signal being relayed by a repeater apparatus, transmits, to the repeater apparatus, downlink control information including an instruction indicating a beam pattern the repeater apparatus should form.

## Description

### TECHNICAL FIELD

The present invention relates to a base station apparatus, a repeater apparatus, and a wireless communication system for performing beamforming, and control methods and programs therefor.

### BACKGROUND ART

Heretofore, communication systems have been proposed in which communication between a base station (BS) and a user terminal (UE) is performed by dynamic beamforming. In NPL1, in order to select an optimal combination from among multiple beam patterns, while switching the UE-side beam pattern within a beam selection period (beam sweeping period), one or more are selected from among measurement results of synchronization signals (PSS/SSS) or reference signals (CSI-RS) transmitted via different BS beam patterns, and the selection results are fed back to the BS together with the corresponding measurement results (RSRP/RSRQ). The BS determines a beam to be used for communication with the UE based on the feedback, and communicates with the UE using the determined beam.

### CITATION LIST

### NON-PATENT LITERATURE

[NPL1] 3GPP, TS 38.214, "NR Physical layer procedures for data", v16.6.0, Jun. 2021

### SUMMARY OF INVENTION

### TECHNICAL PROBLEM

Here, wireless relay apparatuses called radio frequency repeaters (RF repeaters) are used to expand BS coverage area and improve the communication environment of UEs located in dead spots in the coverage area.

Conventional RF repeaters have a nondirectional antenna pattern (omni pattern) or a fixed directivity antenna pattern. However, research is in progress of a technique for applying dynamic beam control also to RF repeaters (NPL2), and there has been a problem in controlling the beam that an RF repeater uses for communication.

The present invention has been made in view of the above-described problem, and aims to provide a technique for controlling a beam pattern of an RF repeater whose beam can be dynamically controlled.

### SOLUTION TO PROBLEM

To solve the problem described above, a base station apparatus that communicates with a user apparatus by a signal being relayed by a repeater apparatus comprises:
transmitting means for transmitting, to the repeater apparatus, downlink control information including an instruction indicating a beam pattern the repeater apparatus should form.

### ADVANTAGEOUS EFFECTS OF INVENTION

According to the present invention, it becomes possible to provide a technique for controlling a beam pattern of an RF repeater whose beam can be dynamically controlled.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a communication system including an RF repeater according to the present embodiment.
FIG. 2 is a configuration diagram of a base station apparatus.
FIG. 3 is a configuration diagram of the RF repeater.
FIG. 4 is a sequence diagram illustrating one example of processing that the communication system executes during beam selection.
FIG. 5 is an explanatory diagram illustrating a time-series change in beam indices in the communication system during the beam selection.
FIG. 6A is a diagram illustrating a configuration of downlink control information that the base station transmits to the RF repeater.
FIG. 6B is a diagram illustrating a configuration of downlink control information that the base station transmits to the RF repeater.
FIG. 6C is a diagram illustrating a configuration of downlink control information that the base station transmits to the RF repeater.
FIG. 7 is a sequence diagram illustrating an example of processing that the communication system executes during beam control.
FIG. 8A is a diagram illustrating an example of resource mapping of transmission from the base station.
FIG. 8B is a diagram illustrating an example of resource mapping of transmission from the base station.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

In the following, description will be provided of processing in which, in a wireless communication system including a radio frequency (RF) repeater whose directivity (beam pattern) can be controlled, beam selection is performed while taking the influence of the beam pattern of the RF repeater into consideration, and the beam pattern of the RF repeater is controlled.

### (System Configuration)

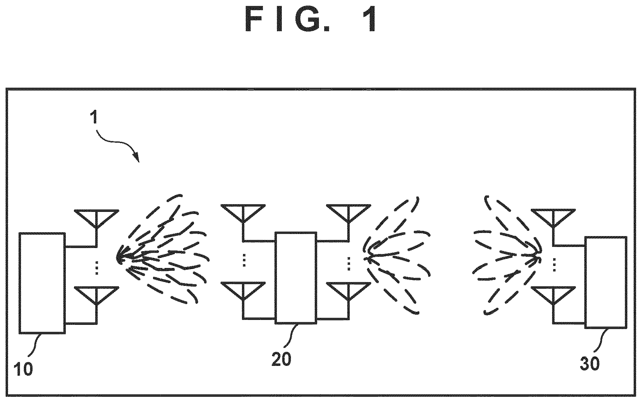

FIG. 1 illustrates an example configuration of a wireless communication system according to the present embodiment. In one example, a wireless communication system 1 is a 5G cellular communication system (mobile communication network). There is no limitation to this, however, and the present system may be, for example, a cellular communication system of a 5G successor or a non-cellular wireless communication system. The wireless communication system 1 is configured to include a base station apparatus (BS) 10, a radio frequency (RF) repeater 20, and a user apparatus (UE) 30. Note that, while one each of the BS 10, the RF repeater 20, and the UE 30 is illustrated in FIG. 1, the wireless communication system 1 may include at least one of the BS 10, the RF repeater 20, and the UE 30 in plurality.

The BS 10 is connected to the UE 30 via the RF repeater 20, and manages uplink (UL) traffic from the UE 30 and downlink (DL) traffic to the UE 30. Furthermore, the BS 10 according to the present embodiment controls the beam pattern used by the RF repeater 20 in UL communication and DL communication of the UE 30.

The RF repeater 20 is a wireless communication apparatus that transmits and receives wireless signals to and from the UE 30 using one of a plurality of beam patterns. In one example, the RF repeater 20 may be a mobile repeater such as a drone or a relay vehicle. The UE 30 is a mobile communication apparatus such as a smartphone.

### (Configuration of Base Station Apparatus)

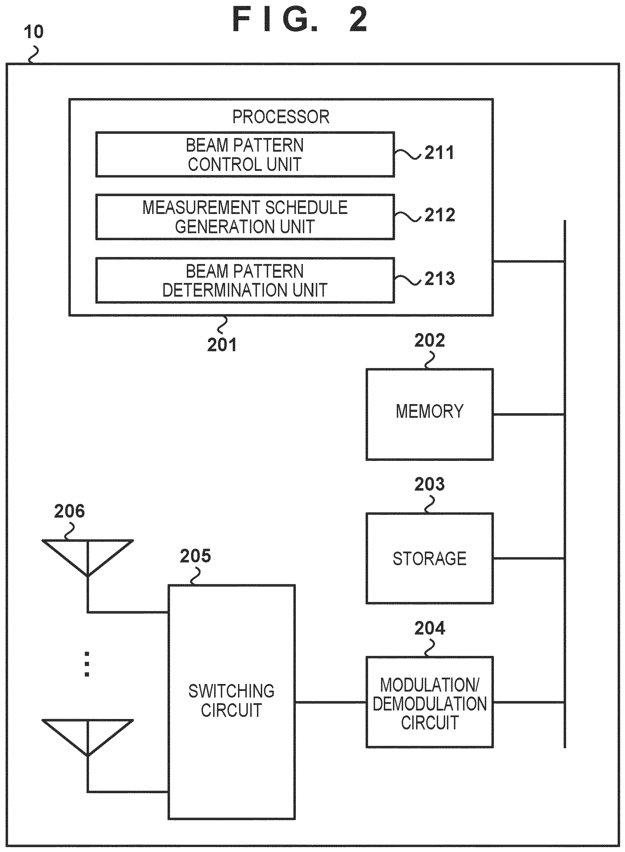

Next, a configuration of the base station apparatus (BS) 10 will be described with reference to FIG. 2.

The BS 10 includes a processor 201, a memory 202, a storage 203, a modulation/demodulation circuit 204, a switching circuit 205, and an antenna 206. The processor 201, the memory 202, the storage 203, and the modulation/demodulation circuit 204 are connected via a bus so as to be capable of communicating with one another.

By executing one or more programs stored in the memory 202, the processor 201 operates as a measurement schedule generation unit 211, a beam pattern determination unit 212, and a beam pattern control unit 213. In one example, the BS 10 includes a computer that includes the processor 201, the memory 202, and the storage 203.

The measurement schedule generation unit 211 creates a schedule according to which measurement target signals to be measured by the UE 30 will be transmitted, and provides the RF repeater 20 and the UE 30 with a notification of the schedule. Based on measurement results (feedback) of the measurement target signals received from the UE 30, the beam pattern determination unit 212 determines beam patterns that the BS 10 and the RF repeater 20 should use. Based on the beam patterns determined by the beam pattern determination unit 212, the beam pattern control unit 213 controls the switching circuit 205 and controls the beam pattern formed by the BS 10. Furthermore, the beam pattern control unit 213 transmits, to the RF repeater 20, an instruction to form a predetermined beam pattern.

The antenna 206 is connected to the switching circuit 205, and can form a plurality of beam patterns. In one example, the antenna 206 includes a plurality of antennas, and the beam pattern is controlled by the switching circuit 205 switching which one of the plurality of antennas is to be used to transmit and receive wireless signals. Alternatively, in another example, the antenna 206 includes an antenna including a plurality of feed points, and the beam pattern is controlled by the switching circuit 205 switching which one of the plurality of feed points is to be used to transmit and receive wireless signals. The modulation/demodulation circuit 204 modulates and demodulates wireless signals transmitted and received from the antenna 206 via the switching circuit. Note that, while detailed description is omitted, the BS 10 may include other functions of a cellular base station, such as a network interface for connecting to a core network, and the management of traffic to and from the UE 30 connected thereto.

### (Configuration of RF Repeater)

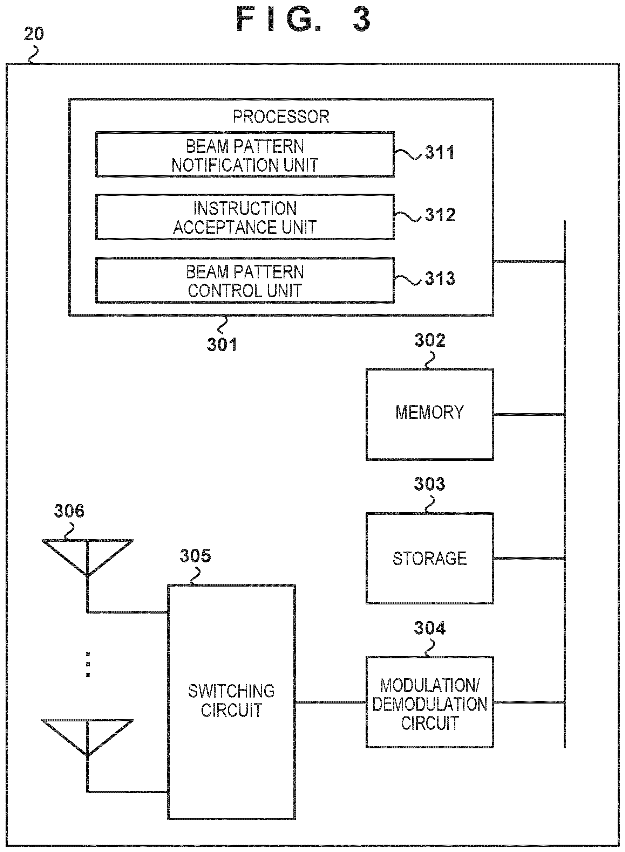

Next, a configuration of the RF repeater 20 will be described with reference to FIG. 3.

The RF repeater 20 includes a processor 301, a memory 302, a storage 303, a wireless communication circuit 304, a switching circuit 305, and an antenna 306.

By executing one or more programs stored in the memory 302, the processor 301 operates as a beam pattern notification unit 311, an instruction acceptance unit 312, and a beam pattern control unit 313. In one example, the RF repeater 20 includes a computer that includes the processor 301, the memory 302, and the storage 303.

The beam pattern notification unit 311 provides the BS 10 with a notification of the number of beam patterns that the RF repeater 20 is capable for forming. The instruction acceptance unit 312 accepts, from the BS 10, a notification relating to time slots in which measurement target signals will be transmitted, and determines the beam pattern in each time slot. Furthermore, the instruction acceptance unit 312 accepts, from the BS 10, an instruction indicating the beam pattern the RF repeater 20 should use. The beam pattern control unit 313 controls the switching circuit 305 based on the instruction accepted by the instruction acceptance unit 312. The switching circuit 305 and the antenna 306 are similar to the switching circuit 205 and the antenna 206 in FIG. 2, and description thereof is thus omitted. The beam pattern control unit 313 relays measurement target signals while switching between beam patterns as described later. Furthermore, as described later, the beam pattern control unit 313 relays uplink traffic and downlink traffic using the beam pattern indicated by the instruction from the BS 10.

### (Beam Selection Processing)

Next, beam selection processing will be described in which the UE 30 measures measurement target signals transmitted by the BS 10, such as synchronization signals (primary synchronization signals (PSSs) or secondary synchronization signals (SSSs)) or reference signals (CSI-RSs), and feeds back measurement results to the BS 10.

In beam selection processing in the case in which the RF repeater 20 is present, the signal intensities of measurement target signals received by the UE 30 may change depending on the combination of the beam patterns of the BS 10, the RF repeater 20, and the UE 30. Due to this, the wireless communication system 1 according to the present embodiment changes signals transmitted in the beam selection processing based on the number of beam patterns formed by the RF repeater 20.

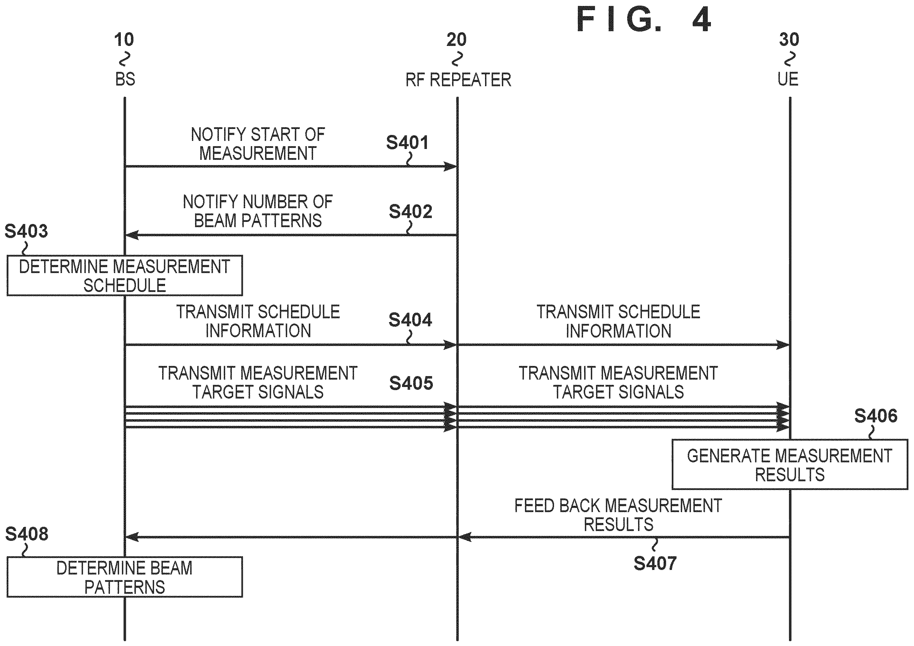

One example of processing executed by the wireless communication system 1 according to the present embodiment will be described with reference to FIG. 4.

Note that the beam selection processing illustrated in FIG. 4 is started when the UE 30 is connected to the BS 10 or when a request to execute the beam selection processing is transmitted from the UE 30 to the BS 10. In one example, the BS 10 may determine to execute the beam selection processing at predetermined time intervals.

First, in step S401, the BS 10 provides the RF repeater 20 with a measurement start notification indicating that measurement for beam selection will be started. In one example, the BS 10 may transmit, to the RF repeater 20, a request signal requesting for a notification of the number of beam patterns the RF repeater 20 is capable of forming, and the RF repeater 20 may interpret the request signal as a notification of execution of the beam selection processing.

Next, in step S402, the RF repeater 20 provides a notification of the number of beam patterns the RF repeater 20 is capable of forming. Having received, in step S402, the notification of the number of beam patterns the RF repeater 20 is capable of forming, in step S403, the BS 10 determines, based on the number of beam patterns the BS 10 is capable of forming and the number of beam patterns the RF repeater 20 is capable of forming, a schedule according to which measurement target signals will be transmitted in the beam selection. Furthermore, in one example, in step S402, the schedule may be determined based on the number of beam patterns the BS 10 is capable of forming, the number of beam patterns the RF repeater 20 is capable of forming, and the number of beam patterns the UE 30 is capable of forming. For example, the length of each time slot in which measurement target signals of the same sequence are transmitted may be determined based on the number of beam patterns the UE 30 is capable of forming, and the number of the time slots may be determined based on the number of beam patterns the BS 10 and the RF repeater 20 are capable of forming.

Next, in step S404, the BS 10 transmits to the RF repeater 20 schedule information based on which the schedule according to which measurement target signals will be transmitted can be specified, and the RF repeater 20 relays and transmits the schedule information to the UE 30. In one example, as the schedule information, a transmission timing indicating time slots in which measurement target signals will be transmitted and the number of sequences of measurement target signals are transmitted. Furthermore, the length of each time slot in which measurement target signals will be transmitted may also be included. In one example, the transmission timing may be the start timing of the first time slot in which measurement target signals will be transmitted, among a plurality of time slots that are provided consecutively in time.

Next, in step S405, the BS 10 transmits measurement target signals based on the schedule information transmitted in step S404. As described later, the RF repeater 20 relays the measurement target signals while switching between beam patterns in accordance with the time slots in which the measurement target signals are transmitted. In step S406, the UE 30 measures the measurement target signals while switching between beam patterns within each time slot in which measurement target signals are transmitted. For each beam pattern of the UE 30, the UE 30 measures at least one measurement parameter out of the received signal strength and signal-to-noise ratio (S/N ratio) of measurement target signals, specifies a sequence (signal pattern) of signals having the highest received signal strength or S/N ratio, and generates a measurement result.

Next, after performing measurement for all measurement target signals, the UE 30 performs feedback of measurement results generated in step S406. The feedback of measurement results includes information according to which, among the measurement target signals measured by the UE 30, a sequence of measurement target signals that exhibited the highest measurement parameter can be specified. Furthermore, the UE 30 stores an ID of the beam pattern that exhibited the highest measurement parameter as the beam pattern to be used for the transmission and reception of wireless signals to and from the RF repeater 20.

Upon receiving the feedback indicating a sequence of measurement target signals from the UE 30, in step S408, the BS 10 determines, based on the feedback, the beam patterns to be used by the BS 10 and the RF repeater 20 for the transmission and reception of wireless signals.

As described up to this point, according to the present embodiment, the BS 10 can ascertain a beam pattern to be used by the BS 10 for the transmission and reception of wireless signals between the RF repeater 20 and itself, and a beam pattern to be used for the transmission and reception of wireless signals between the RF repeater 20 and the UE 30.

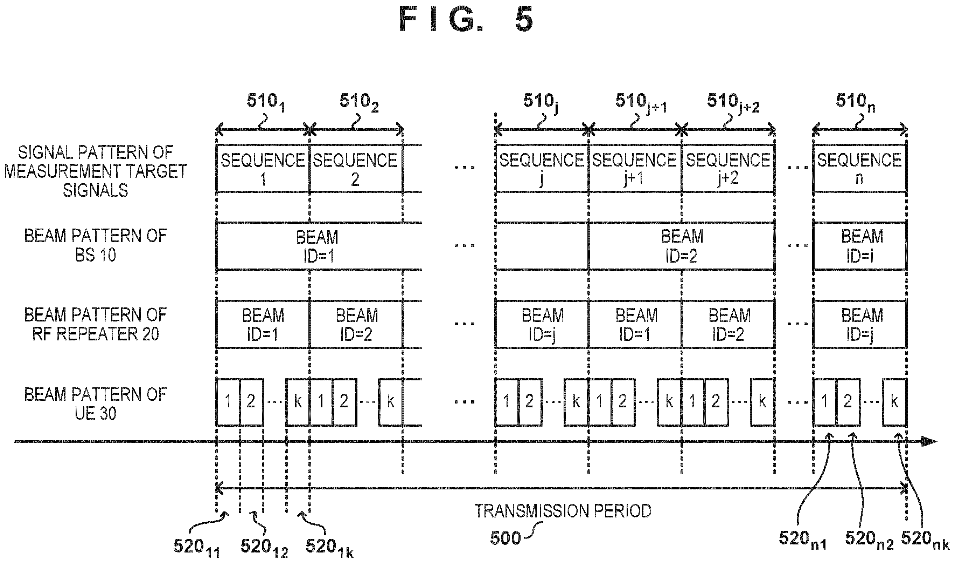

Here, sequences of measurement target signals transmitted by the BS 10, and beams patterns used by the BS 10, the RF repeater 20, and the UE 30 for the transmission and reception of the measurement target signals will be described with reference to FIG. 5.

A measurement-target-signal transmission period 500 includes time slots 510₁ to 510ₙ (may also be referred to hereinafter as time slot(s) 510 without being distinguished from one another) that are provided consecutively in time in accordance with the number of combinations of i beam patterns the BS 10 is capable of forming and j beam patterns the RF repeater 20 is capable of forming. Here, n = i × j.

In each time slot 510, measurement target signals encoded using a different sequence for each time slot 510 are transmitted multiple times, and one time slot 510₁ includes k subslots 520₁₁ to 520₁ₖ (may be referred to hereinafter as subslot(s) 520 without being distinguished from one another) that the UE 30 is capable of forming. In the present embodiment, description will be provided assuming that one measurement target signal is transmitted in each subslot 520; however, measurement target signals of the same signal pattern (sequence) may be transmitted multiple times. The UE 30 switches between beam patterns for each of the subslots 520₁₁ to 520ₙₖ, in which a measurement target signal is measured at least once. As illustrated in FIG. 5, the UE 30 performs reception using beam pattern 1 in subslot 520₁₁, performs reception using beam pattern 2 in subslot 520₁₂, and performs reception using beam pattern k in subslot 520₁ₖ. By repeating this in each subslot, the measurement of measurement target signals can be performed such that the combination of the beam patterns of the BS 10, the RF repeater 20, and the UE 30 is different in all subslots.

As described up to this point, the base station apparatus according to the present embodiment transmits measurement target signals using the same beam pattern in a plurality of time slots in which measurement target signals of different sequences are transmitted. Furthermore, the RF repeater transmits measurement target signals while switching between beam patterns in the plurality of time slots in which the base station apparatus transmits measurement target signals using the same beam pattern. Thus, by receiving, from the user apparatus, a sequence of measurement target signals that had excellent reception quality, the base station apparatus can specify a beam pattern the base station apparatus should use and a beam pattern the RF repeater should use.

### (Beam Pattern Control)

Next, a method that the BS 10 uses to control the beam pattern of the RF repeater 20 will be described.

The BS 10 may need to control the beam pattern of the RF repeater 20 in accordance with the destination UE 30. Here, it is conceivable to transmit downlink control information (DCI) in a physical downlink control channel (PDCCH). However, as a precondition, information to be used in decoding by the UE 30 is stored in a DCI defined in a current standard such as the 3rd Generation Partnership Project (3GPP) (registered trademark)). Thus, the DCI needs to include a downlink signal demodulation method, etc., leading to the problem of an increase in signaling overhead. Thus, in the wireless communication system according to the present embodiment, a new DCI format is defined to transmit a beam pattern instruction to the RF repeater.

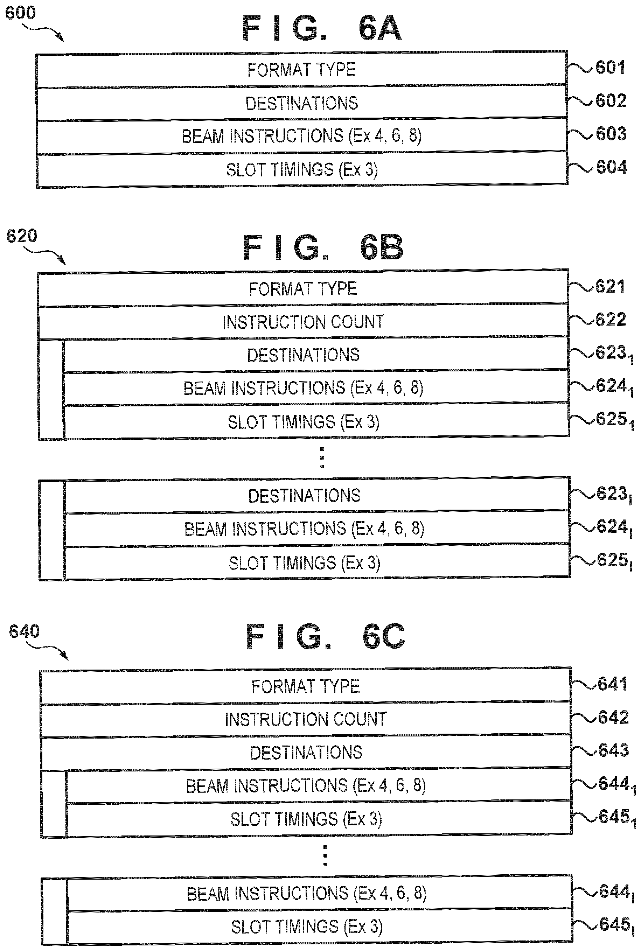

FIGS. 6A to 6C illustrate examples of DCI formats according to the present embodiment.

A DCI format 600 illustrated in FIG. 6A includes a format type 601, a destination 602, a beam instruction 603, and a slot timing 604.

The format type 601 indicates that the DCI format is that for providing a RF repeater 20 with a beam pattern instruction. The destination 602 indicates an identifier of the RF repeater 20 whose beam pattern is to be controlled. The beam instruction 603 indicates a beam indicator of the RF repeater 20. In one example, the beam instruction 603 includes four bits, and the slot timing 604 is timing information indicating an identifier of a slot in which transmission/reception of a wireless signal to/from the UE 30 is to be performed using the beam pattern indicated in the beam instruction 603.

FIG. 6B is one example of a DCI format for providing a plurality of RF repeaters 20 with beam pattern instructions. In the example in FIG. 6B, instructions for l RF repeaters 20 are included in one DCI format.

ADCI format 620 illustrated in FIG. 6B includes a format type 621, an instruction count 622, destinations 623₁ to 623₁, beam instructions 624₁ to 624₁, and slot timings 625₁ to 625₁.

The format type 621 indicates that the DCI format is that for providing beam pattern instructions to a plurality of RF repeaters 20. The instruction count 622 indicates the number of combinations of a destination, a beam instruction, and a slot timing that are included in the DCI format. The destinations 623₁ to 623₁, the beam instructions 624₁ to 624₁, and the slot timings 625₁ to 625₁ are similar to the destination 602, the beam instruction 603, and the slot timing 604 in FIG. 6A, and description thereof is thus omitted. According to the DCI format illustrated in FIG. 6B, beam pattern instructions can be provided to a plurality of RF repeaters using one DCI.

FIG. 6C is a diagram for providing one RF repeater 20 with an instruction indicating beam patterns to be used in a plurality of slot timings. In the example in FIG. 6C, an instruction indicating beam patterns to be used in l slot timings is provided.

ADCI format 640 illustrated in FIG. 6C includes a format type 641, an instruction count 642, a destination 643, beam instructions 644₁ to 644₁, and slot timings 645₁ to 645₁.

The format type 641 indicates that the DCI format is that for providing one RF repeater 20 with an instruction indicating beam patterns to be used in a plurality of timings. The instruction count 642 indicates the number of slot timings included in the DCI format. The destination 643, the beam instructions 644₁ to 644₁, and the slot timings 645₁ to 645₁ are similar to the destination 602, the beam instruction 603, and the slot timing 604 in FIG. 6A, and description thereof is thus omitted. According to the DCI format illustrated in FIG. 6C, an instruction indicating beam patterns at a plurality of timings can be provided to one RF repeater using one DCI.

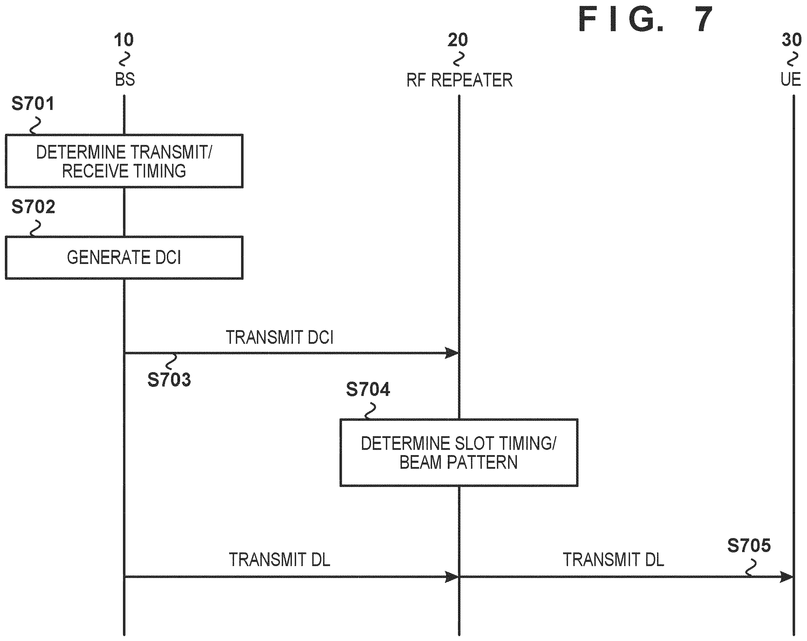

Next, one example of processing executed by the wireless communication system according to the present embodiment will be described with reference to FIG. 7.

First, in step S701, in response to an uplink transmission request or the arrival of downlink data addressed to a UE 30 that is in communication with the BS 10 via the RF repeater 20, the BS 10 determines a timing for transmitting/receiving a wireless signal to/from the UE 30.

Next, based on the UE 30 that is the destination of the downlink data, in step S702, the BS 10 generates a DCI for providing the RF repeater 20 with an instruction regarding a slot timing and a beam pattern to be used in the slot timing. In one example, the BS 10 generates a DCI that is an instruction indicating the beam pattern the RF repeater 20 should use that has been determined in step S407 in FIG. 4 based on feedback from the UE 30, and the timing determined in step S701.

Next, in step S703, the BS 10 transmits the DCI generated in step S702 to the RF repeater 20. The RF repeater 20 determines the slot timing and beam pattern designated in the DCI received in step S703 (step S704), and relays a wireless signal between the BS 10 and the UE 30 in the slot timing by using the beam pattern (step S705). Thus, the BS 10 can control the beam pattern of the RF repeater 20.

### (Examples of Resource Mapping)

The RF repeater 20 cannot predict when DCIs addressed thereto will be transmitted, and thus performs blind decoding in order to detect DCIs addressed thereto within a search space that is defined in terms of at least one of frequency and time.

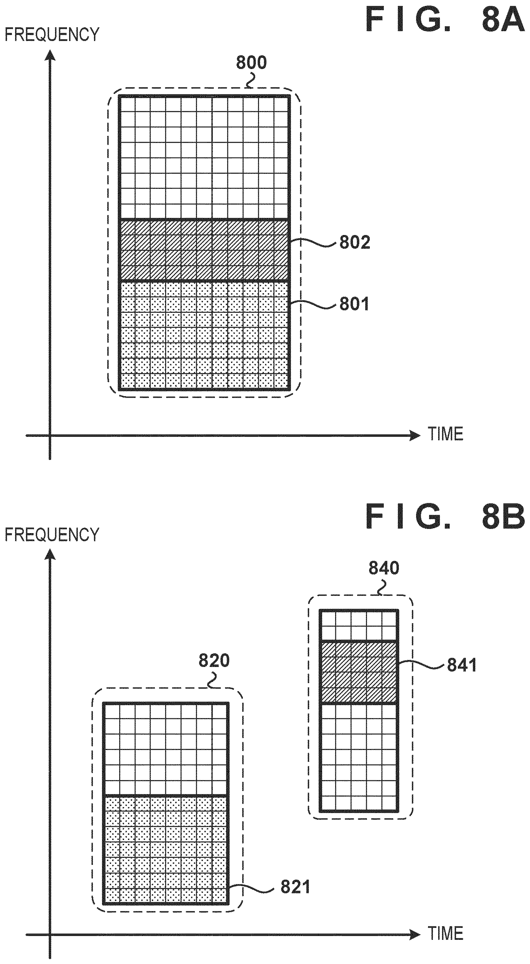

Here, resource mapping examples in which a DCI addressed to the RF repeater 20 is transmitted will be described with reference to FIGS. 8A and 8B.

FIG. 8A is an example of resource mapping in a case in which a DCI addressed to the RF repeater 20 is transmitted within the same search space 800 as a DCI addressed to the UE 30. A control channel element (CCE) 801 addressed to the UE 30 and a CCE 802 addressed to the RF repeater 20 are included in the search space 800. The CCE addressed to the RF repeater 20 is a CCE generated based on a DCI illustrated in FIG. 6A, 6B, or 6C, and, as is the case with the DCI addressed to the UE 30, the CCE is subjected to processing such as the addition of cycle redundancy check (CRC) bits and masking using a network identifier such as a radio network temporary identifier (RNTI). Thus, a predetermined apparatus having the matching network identifier will succeed in decoding the CRC, and other apparatuses having unmatching network identifiers will fail in decoding the CRC due to CRC errors.

As a result of a DCI addressed to the RF repeater 20 and a DCI addressed to the UE 30 being transmitted within the same search space as illustrated in FIG. 8A, the RF repeater 20 and the UE 30 need to search for CCEs within a large search space.

In FIG. 8B, a DCI addressed to the RF repeater 20 is transmitted in a search space 840 that is different in terms of at least one of frequency and time from a search space 820 in which a DCI addressed to the UE 30 is transmitted. In the example in FIG. 8B, a CCE 821 addressed to the UE 30 is included in the search space 820, and a CCE 842 addressed to the RF repeater 20 is included in the search space 840. Thus, the UE 30 only needs to determine whether or not a CCE addressed to itself is included in the search space 820, and the RF repeater 20 only needs to determine whether or not a CCE addressed to itself is included in the search space 840; thus, search load can thus be suppressed.

On the other hand, according to the resource mapping illustrated in FIG. 8A, CCEs addressed to the RF repeater 20 can be transmitted without making any changes to preexisting resource mapping. Furthermore, search space division loss can be suppressed in comparison with FIG. 8B.

### <Other Embodiments>

The invention is not limited to the foregoing embodiments, and various variations/changes are possible within the spirit of the invention.

For example, as described with reference to FIGS. 8A and 8B, a CCE addressed to the RF repeater 20 may be transmitted so that the CCE cannot be decoded without using the RNTI of the RF repeater 20 or a group to which the RF repeater 20 belongs. Thus, in one example, the destinations 602, 623, and 643 need not be included in the DCI formats illustrated in FIGS. 6A to 6C.

In the present embodiment, description of the beam pattern the RF repeater 20 uses to receive a signal from the BS 10 has been omitted. In one example, upon receiving a signal from the BS 10, the RF repeater 20 may receive the signal using an omni pattern or a predetermined beam pattern. Alternatively, upon connection to the BS 10, the RF repeater 20 may perform beam selection processing between the BS 10 and itself to determine in advance the beam pattern the RF repeater 20 will use to a receive signal from the BS 10. Alternatively, the BS 10 may determine the number of time slots within a measurement period based on the number of beam patterns the BS 10 is capable of using for transmission, the number of beam patterns the RF repeater 20 is capable of using for reception, and the number of beam patterns the RF repeater 20 is capable using for transmission.

Furthermore, description has been provided on the assumption that the BS 10 according to the present embodiment acquires, from the RF repeater 20, information regarding the number of beam patterns the RF repeater 20 is capable of forming. However, in one example, the number of beam patterns that the RF repeater 20 uses to relay measurement target signals may be defined in advance in the wireless communication system 1, and, in this case, the notification in step S402 in FIG. 4 may be omitted.

This application claims priority from Japanese Patent Application No. 2021-143374 filed on September 2, 2021, which is hereby incorporated by reference herein.

### REFERENCE SIGNS LIST

- 1:: Wireless communication system
- 10:: Base station apparatus
- 20:: RF repeater
- 30:: User apparatus

## Claims

1. A base station apparatus that communicates with a user apparatus by a signal being relayed by a repeater apparatus, the base station apparatus comprising
transmitting means for transmitting, to the repeater apparatus, downlink control information including an instruction indicating a beam pattern the repeater apparatus should form.

2. The base station apparatus according to claim 1 further comprising:
acquiring means for acquiring, from the user apparatus, measurement results of a plurality of measurement target signals relayed by the repeater apparatus using different beam patterns; and
determining means for determining a beam pattern the repeater apparatus should form, based on the measurement results acquired by the acquiring means.

3. The base station apparatus according to claim 1 or 2,
wherein the downlink control information further includes timing information that designates a timing in which a beam pattern is to be used.

4. The base station apparatus according to any one of claims 1 to 3,
wherein the downlink control information further includes a plurality of pieces of timing information that designate a plurality of timings in which a beam pattern is to be used.

5. The base station apparatus according to any one of claims 1 to 4,
wherein the downlink control information includes beam pattern instructions for a plurality of different repeater apparatuses.

6. The base station apparatus according to any one of claims 1 to 5,
wherein the downlink control information is transmitted in the same search space as downlink control information transmitted to a user apparatus.

7. The base station apparatus according to any one of claims 1 to 5,
wherein the downlink control information is transmitted in a search space that is different from a search space for downlink control information transmitted to a user apparatus.

8. The base station apparatus according to claim 6 or 7,
wherein the downlink control information is transmitted in a state in which the downlink control information is encoded using a network identifier of the repeater apparatus.

9. A repeater apparatus that relays communication between a base station apparatus and a user apparatus, the repeater apparatus comprising:
receiving means for receiving downlink control information including an instruction indicating a beam pattern to be formed by the repeater apparatus; and
controlling means for controlling a beam pattern, based on the downlink control information received by the receiving means.

10. A wireless communication system including: a repeater apparatus that relays communication between a base station apparatus and a user apparatus; and the base station apparatus,
wherein the base station apparatus comprises transmitting means for transmitting, to the repeater apparatus, downlink control information including an instruction indicating a beam pattern the repeater apparatus should form, and
the repeater apparatus comprises controlling means for controlling a beam pattern based on the received downlink control information.

11. A control method for a base station apparatus that communicates with a user apparatus by a signal being relayed by a repeater apparatus, the control method comprising
transmitting, to the repeater apparatus, downlink control information including an instruction indicating a beam pattern the repeater apparatus should form.

12. A control method for a repeater apparatus that relays communication between a base station apparatus and a user apparatus, the control method comprising:
receiving downlink control information including an instruction indicating a beam pattern to be formed by the repeater apparatus; and
controlling a beam pattern based on the received downlink control information.

13. A control method for a wireless communication system including: a repeater apparatus that relays communication between a base station apparatus and a user apparatus; and the base station apparatus, the control method comprising:
the base station apparatus transmitting, to the repeater apparatus, downlink control information including an instruction indicating a beam pattern the repeater apparatus should form; and
the repeater apparatus controlling a beam pattern based on the received downlink control information.

14. A program **characterized by** causing a computer of a base station apparatus that communicates with a user apparatus by a signal being relayed by a repeater apparatus to execute a control method comprising
a transmitting step of transmitting, to the repeater apparatus, downlink control information including an instruction indicating a beam pattern the repeater apparatus should form.

15. A program that causes a computer of a repeater apparatus that relays communication between a base station apparatus and a user apparatus to execute a control method comprising:
a receiving step of receiving downlink control information including an instruction indicating a beam pattern to be formed by the repeater apparatus; and
a controlling step of controlling a beam pattern based on the received downlink control information.

16. A program that causes a computer of a wireless communication system including: a repeater apparatus that relays communication between a base station apparatus and a user apparatus; and the base station apparatus to execute a control method comprising:
a transmitting step of transmitting, to the repeater apparatus, downlink control information including an instruction indicating a beam pattern the repeater apparatus should form; and
a controlling step of controlling a beam pattern of the repeater apparatus based on the received downlink control information.
